# EUROPEAN PATENT APPLICATION

(11) **EP 1 538 513 A1**
(43) Date of publication of application: **08.06.2005**
(21) Application number: 03388084.0
(22) Date of filing: 02.12.2003
(51) Int. Cl.: G06F 3/023

(54) **User interface**

(71) Applicant: Sony Ericsson Mobile Communications AB, 221 88 Lund (SE)
(72) Inventor: Jönsson, Anders, 226 49 Lune (SE); Ericsson, Ted, Beijing (CN)
(74) Representative: Boesen, Johnny Peder

(57) **Abstract**

The invention relates to a user interface (100; 200) of a mobile station (10; 20), which user interface (100; 200) comprises an input device (110; 210) for inputting of character data into said mobile station (10; 20). The input device (110; 210) comprises a multidirectional input device (110; 210) arranged to input said character data. Examples of such a multidirectional input device (110; 210) are: a 13 way joystick, a 9 way joystick, a rocker key, an analog joystick, a jog ball, a track ball or a disc/wheel dial. The user interface (100; 200) of the invention can replace a traditional key pad or key board, thereby reducing the size of the user interface, so that the overall size of the mobile station (10; 20) can be reduced or the display of the mobile station (10; 20) can be increased without increasing the size of the mobile station (10; 20).

## Description

### Technical field of the invention:

This invention relates to a user interface of a mobile station, which user interface comprises at least one input device for inputting of character data and/or option choice information into the mobile station. The invention moreover relates to a mobile station with a user interface comprising an input device for inputting of character data into the mobile station.

### Description of related art:

Most common mobile stations, such as mobile phones, personal digital assistants, pagers, etc., and remote controls for such mobile stations, contain user interfaces with a plurality of buttons being able to be pushed to input character data, such as text and numbers, into the mobile station. Moreover, means for navigating through menus on a display of the mobile station are usually provided.

The industry of mobile stations tries to produce smaller and smaller mobile stations, such as mobile telephones, Personal Digital Assistants, etc. and remote controls for such mobile stations. Meanwhile, the display tends to take up a relatively larger part of the mobile station, supporting services such as games, picture representations, displaying of photos. For this reason the physical space for a user interface on a modern mobile station tends to decrease. Therefore use of the user interface of a modern mobile station can be somewhat cumbersome in that the size of the buttons has become small compared to the average size of adult fingers, especially at mobile telephones, which comprise a plurality of buttons, usually about 15 or 17 buttons or even more. Therefore the need for a different type of user interface to a mobile station exists.

The object of this invention is to provide an alternative to the prevalent user interfaces. A further object is to provide a space efficient and user friendly user interface.

It should be noted that, within this description, the term "user interface" is meant to cover the means with which a user can input information into a mobile station; thus the term "user interface" comprises any input means such as a keyboard, a keypad, a pushbutton key set, a mouse, track ball, joy stick, a rocker key, a jog ball, a disc/wheel dial, etc., or a combination hereof.

Moreover, it should be noted that the term "mobile station" implicitly means "electronic mobile station" or "digital mobile station", i.e. a mobile station with one or more electronic and/or digital components.

It should also be noted that the term "character data" is meant to cover alphabetic letters, numbers as well as symbols, such as e.g. punctuation marks, brackets, etc. Moreover, the character data could cover strokes constituting parts of letters in languages using another alphabet than the Arabic alphabet, such as Chinese, Japanese, etc.

Finally, it should be noted that the term "option choice" is meant to cover the choice of options of the mobile station, such as entering into a menu of functionalities of the mobile station, where the menu of functionalities typically depends upon the actual state, such as text input mode, digit input mode, game mode, etc., of the mobile station.

### Summary of the invention:

The objects of the invention are achieved, when the user interface of a mobile station of the kind mentioned in the opening paragraph is characterized in that the at least one input device comprises a multidirectional input device arranged to input character data. The use of such a multidirectional input device for inputting of character data renders a plurality of buttons superfluous, such that the user interface of the mobile station can be reduced to the multidirectional input device, eventually supplemented with a few auxiliary buttons. Such a user interface of a mobile station would traditionally be a key board, key pad or key set, which hereby can be substituted by the user interface according to the invention. Hereby, the size of the user interface of the mobile station can be reduced considerably compared to the size of a user interface with a plurality of buttons. When the size of the user interface of the mobile station can 'be reduced, the size of the mobile stations itself can be reduced or larger LCDs could be provided without increasing the size of the mobile station. Further advantages reside in the need for fewer parts (buttons, keys, etc.) as wells as fewer keypad lighting diodes, which renders the production of mobile stations incorporating the user interface according to the invention less costly.

According to a preferred embodiment, the multidirectional input device in the interface device according to the invention is arranged to also input option choice information. Hereby, the same multidirectional input device can be used for inputting of character data and for performing option choices so that the user interface can be used in an easy way with only few movements of the fingers of the user's hand.

Preferably, a selected character is input into the mobile station with a user interface according to the invention, when the multidirectional input device has been put into a position corresponding to the selected character, upon one of the following: returning of the multidirectional input device in a neutral position, or pointing the multidirectional input device in a direction corresponding to another character. Alternatively, a selected character is input into the mobile station, when the multidirectional input device has been put into a position corresponding to the selected character for a predetermined time interval. These ways of controlling the inputting of character information are advantageous when user interface of the mobile station is adapted to use in predictive text input method, such as "T9".

According to a preferred embodiment the multidirectional input device is arranged to be movable in thirteen directions, each direction being adapted to input character data and/or option choice information into the mobile station. Thus, each of the numerals from 0 to 9 and two symbols or functions, e.g. the symbols "#" and "*" and "clear", can be represented by a direction of the multidirectional input device, so that none or only very few auxiliary buttons are needed to provide a small and user friendly user interface of a mobile station. As an example the multidirectional input device could be supplemented with three auxiliary buttons: a "yes" button, a "no" button and an option button.

According to an alternative preferred embodiment the multidirectional input device is arranged to be movable in nine directions, each direction being adapted to input character data and/or option choice information into the mobile station. Hereby, a user interface is provided, wherein the advantages of the nine directions of the multidirectional input device, which enhances the certainty of the user of which direction is indicated and the number of auxiliary buttons needed to provide the appropriate functioning of the mobile station, are balanced against each other.

It is advantageous, if the multidirectional input device is a device chosen among the following: a 13 way joystick, a 9 way joystick, and a rocker key. These devices have a number of distinct input directions, making inputting of character data and/or option choice information easy and user friendly.

In an alternative, preferred embodiment, the multidirectional input device of the user interface of the invention is a device chosen from the group consisting of the following: an analog joystick, a jog ball, a track ball, a disc/wheel dial. These devices are all analog or possibly digital input devices which, by means of software inside the mobile station, can be programmed to have a desired number of directions. This number of directions can be any relevant number of directions, e.g. 4, 5, 8, 9. Moreover, the number of directions wherein data or information of the multidirectional input device can be inputted can differ in dependence of different modes of the mobile station; e.g. the multidirectional input device could be movable to input character data or option choice information in 13 directions in a text input mode, whilst the same multidirectional input device might be used as a 4 way joystick in a game play mode.

It is advantageous, if the multidirectional input device is an analog device as mentioned above, being programmed to be movable in a number of directions, where the number of directions can be equal to 13, less than 13 or more than 13, and where each direction is adapted to input character and/or option choice information into the mobile station. However, the multidirectional device might still be able to be moved into other directions, but such other directions are thus not related to any character data or option choice information. When the number of directions can be programmed to e.g. 13 or 15, the number of auxiliary buttons needed in a user interface can be minimized or even rendered superfluous, or the number of alphabetic letters corresponding to each direction of the multidirectional input device can be reduced. When the number of directions can be programmed to be any appropriate number, the multidirectional input device can be adapted to any user need; moreover, the multidirectional input device could be adapted to different numbers of directions in different modes of the mobile stations, as mentioned above.

It should be noted that the analog devices mentioned above can be adjusted in a number of ways using software in the mobile station. As mentioned above, the number of directions of the multidirectional input device can be chosen arbitrarily within reasonable limits (typically, but not necessarily less than 20), depending on the size of the device. Typically, it would be preferable that the directions of the input device are equally spaced to enhance user friendliness; however, they can be spaced in a varied way such that some of the directions are closer spaced than others.

In a preferred embodiment of the user interface the mobile station chosen amongst one of the following: a mobile telephone, a Personal Digital Assistant, a remote control device, a cordless telephone, and a game console. The remote control device could be an accessory to a mobile telephone or a Personal Digital Assistant, where the connection is made via an infrared (Ir) or a radio wave (RF) connection, e.g. Bluetooth.

As mentioned above, the invention moreover relates to a mobile station with a user interface. This provides the same advantages and solves the same problem for the same reasons as described previously in relation to the user interface itself.

It should be noted that the term "mobile station" used in this description is meant to include all equipment such as mobile telephones, cellular telephones, radio telephones, pagers, communicators, i.e. electronic organizers, smart phones or the like. However, the term "mobile station" should not be interpreted as limited to the above, but relates to any mobile electric or electronic consumer equipment wherein a user interface according to the invention might be appropriate, such as calculators, GPS receivers, etc.

Moreover, it should be stressed, that throughout this description, the term "character data" comprises the numerals from 0 to 9, the letters of the alphabet and any symbols, e.g. *, #, @, etc.

Finally, it should be noted that the meaning of the wording "to input data to a mobile station" should be understood as "inputting data into a memory of a mobile station" or "inputting data into a program or functionality in the mobile station", so that the data input can be stored or used in the mobile station.

### Brief description of the drawings:

The invention will be described more fully below in connection with preferred embodiments and with reference to the drawings, in which:

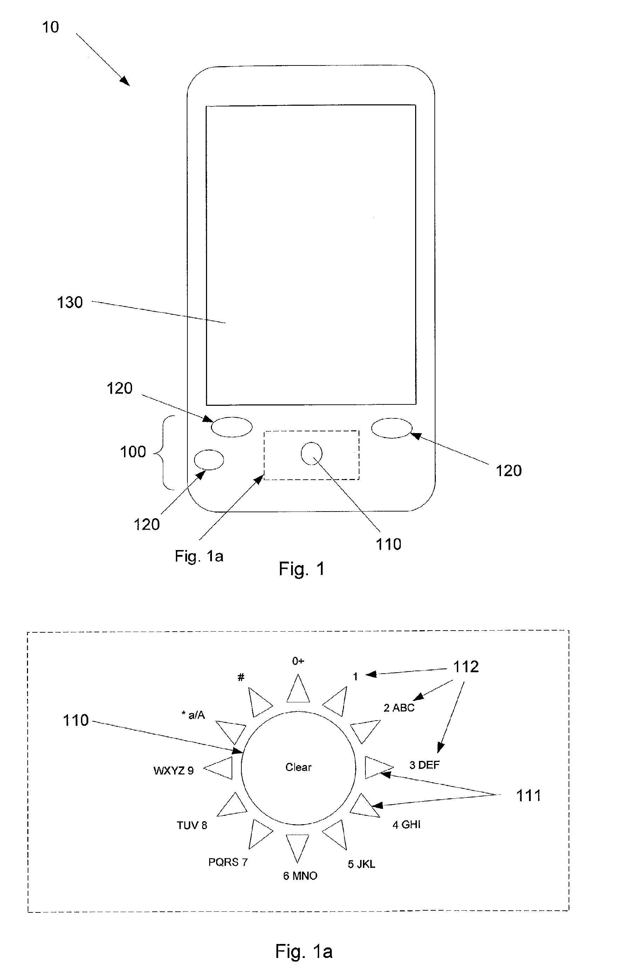

Fig. 1 shows a mobile station comprising a user interface according to the invention;
Fig 1 a is an enlarged view of a part of fig. 1;
Fig. 2 shows a mobile station comprising an alternative user interface according to the invention; and
Fig. 2a is an enlarged view of a part of fig. 2.

### Detailed description of embodiments:

Fig. 1 shows a mobile station 10, for instance a mobile telephone, seen from ahead and comprising a user interface 100 according to the invention. The user interface 100 comprises a multidirectional input means 110 and three auxiliary buttons 120. As shown in fig. 1, the mobile station 10 moreover comprises a display 130; additionally, it typically contains appropriate elements chosen among the following (not shown in the figures): a memory, a microphone, a loudspeaker, communication means. It should be noted that the latter elements of the mobile station do not form part of the invention.

This embodiment of the invention regards the user interface 100, which contains a multidirectional input device 110 and the auxiliary buttons 120.

Fig 1 a is an enlarged view of a part of fig. 1 showing the multidirectional input device 110. In the example in fig. 1a the multidirectional input device 110 is a 13 way joystick (e.g. 12 ways plus depress), so that the multidirectional input device 110 is a joystick that can be moved in twelve directions and that can be depressed (being a thirteenth direction). Alternatively, the multidirectional input device 110 could be an analog joystick, a jog ball, a track ball, a disc/wheel dial, a touch pad or a rocker key with thirteen directions in all (12 plus depress).

On the cover of the mobile station 10 triangles 111 and character data 112 are printed around the multidirectional input device 110. The only function of the printed triangles 111 is to indicate the directions in which the multidirectional input device can be moved. Therefore they might be omitted or substituted by any other means or any other symbol printed on the cover, such as line segments, points, dots, etc. The character data 112 printed on the cover of the mobile station indicates the character data which are related to the respective directions of movement of the multidirectional input device 110. The characters shown in fig. 1 a is an example only of the most commonly used character data; of course these can be chosen to suit any appropriate need.

In the user interface 100 shown in fig. 1 and 1 a there is no need for separate buttons for "clear", star ("*") or pound ("#") in that this function and these symbols can be indicated by appropriate movements of the multidirectional input device 110. However, as shown in fig. 1, keys or buttons 120 for "yes", "no" and an option key or button is provided.

In one example, the multidirectional input device 110 can be arranged to be able to be tilted to the left, the right, up, down or in a 30 degree angle step to get the appropriate numeral indicated on the front cover as printed text 112. This is a typical use of the mobile phone in a phone dial mode. The multidirectional input device can be arranged to be depressed to access the "clear"-button functionality. As an alternative, the "clear"-button functionality could be replaced with the option key 120.

When the mobile phone is used in a text mode, such as SMS or MMS mode, the multidirectional input device 110 is arranged to have text entered when it is tilted to the left, the right, up, down or in a 30 degree angle step to get the appropriate letter or symbol indicated on the front cover as printed text 112. The multidirectional input device can be arranged to access the "clear"-button functionality by depression of the multidirectional input device 110. As an alternative, the "clear"-button functionality could be replaced with the option key 120.

Any known predictive text input methods could be used in the embodiment shown in figs. 1 and 1a, just as any current MMl still could be used without modifications.

Regardless of which mode the mobile phone is used in, the user interface 100 can be arranged so that the multidirectional input device 110 can be tilted in a direction to select a character and that the character is inputted after the multidirectional input device 110 is released. Alternatively, the user interface 100 can be arranged so that the multidirectional input device 110 can be tilted in a direction to select a character and that the character is inputted directly when the character has been selected (i.e. before the key is released). Alternatively, the user interface 100 could be arranged so that the 13^{th} direction (depression) of the multidirectional input device 110 should be selected to confirm the data (i.e. key directions 1 to 12) already having been selected.

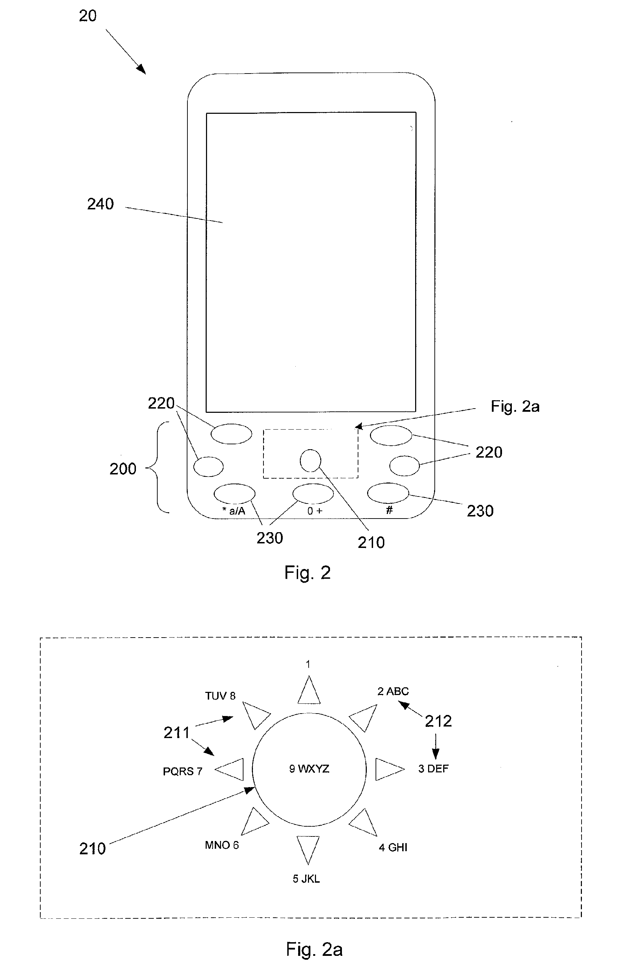

Fig. 2 shows a mobile station 20 seen from ahead and comprising an alternative user interface 200 according to the invention. The mobile station 20 preferably moreover comprises a display 240; additionally it typically contains appropriate elements chosen among the following (not shown in the figures): a memory, a microphone, a loudspeaker, communication means. It should be noted that the latter elements of the mobile station do not form part of the invention. The invention regards the user interface 200, which contains a multidirectional input device 210 and the auxiliary buttons 220 and 230.

Fig 2a is an enlarged view of a part of fig. 2 showing the multidirectional input device 210. In the example in fig. 2a the multidirectional input device 210 is a 9 way joystick (i.e. 8 ways plus depress), so that the multidirectional input device 210 is a joystick that can be moved in eight directions and that can be depressed (being a ninth direction). Alternatively, the multidirectional input device 210 could be an analog joystick, a jog ball, a track ball, a disc/wheel dial, a touch pad or a rocker key with nine directions in all (8 plus depress).

On the cover of the mobile station 20 triangles 211 and character data 212 are printed around the multidirectional input device 210. The only function of the printed triangles 211 is to indicate the directions in which the multidirectional input device can be moved. Therefore they might be omitted or substituted by any other means or any other symbol printed on the cover, such as line segments, points, dots, etc. The character data 212 printed on the cover of the mobile station indicates the character data which are related to the respective directions of movement of the multidirectional input device 210. The characters shown in fig. 2a is an example only of the most commonly used character data; of course these can be chosen to suit any appropriate need.

In the user interface 200 shown in fig. 2 and 2a a row of auxiliary buttons 230 is arranged below the multidirectional input device 210. These auxiliary buttons indicates the characters "* a/A", "0 +" and "#", respectively, in this example. As shown in fig. 2, four keys or buttons 220 for e.g. "yes", "no", "option" and "clear" are provided.

When a user utilizes the mobile phone in a phone dial mode, the multidirectional input device 210 can be used by tilting it to the left, the right, up, down or in a 45 degree angle step to get the appropriate numeral indicated on the front cover as printed text 212. In this example, these numerals are the numerals from "1" to "8", where the numeral "9" is indicated by depressing the multidirectional input device 210. The numeral "0" is in this example indicated by means of one of the buttons 230.

When the user utilizes the mobile phone in a text mode, such as SMS or MMS mode, he/she can use the multidirectional input device 210 to enter text by tilting it to the left, the right, up, down or in a 45 degree angle step to get the appropriate letter or symbol indicated on the front cover as printed text 212. The user depresses the multidirectional input device to access the letters "w", "x", "y", or "z". If the symbols star ("*"), zero ("0") or pound ("#") are needed, one of the buttons 230 should be used.

Any known predictive text input methods could be used in the embodiment shown in figs. 2 and 2a, just as any current MMI still could be used without modifications.

It should be stressed that even though the multidirectional input device 210 in fig. 2 is shown to be relatively small compared to the overall size of the mobile station, which normally would be the case, if it was a joystick, the input device 210 could as well be a rocker key or a disc/wheel dial as noted above. Such a rocker key or disc/wheel dial typically could also be arranged to be movable in eight directions to select data plus a ninth direction (depressing of the rocker key) to enter the selected characters into the memory of the mobile station. In the case of the multidirectional input device 210 being a rocker key, the relatively size thereof would be greater than shown in fig. 2; however, this is of no importance in relation to the perception of the invention.

Regardless of which mode the mobile phone is used in, the user interface 200 can be arranged so that the multidirectional input device 210 can be tilted in a direction to select a character and that the character is inputted after the multidirectional input device 210 is released. Alternatively, the user interface 200 can be arranged so that the multidirectional input device 210 can be tilted in a direction to select a character and that the character is inputted directly when the character has been selected (i.e. before the key is released. Alternatively, the user interface 200 could be arranged so that the 9^{th} direction (depression) of the multidirectional input device 210 should be selected to confirm the data (i.e. key directions 1 to 8) already having been selected.

It should be noted that any combination of features shown in fig. 1, 1 a, 2 and 2a could be used as appropriate. Moreover, it should be noted that the mobile stations shown in the figures naturally are equipped with necessary electric and electronic elements to input information into the mobile station, to connect the different elements of the mobile station, etc.

It should be stressed, that even though the use of a multidirectional input device for entering of character data has been described, this does not preclude the additional use of said multidirectional input device to navigate through menus on the mobile station as well.

## Claims

1. A user interface (100; 200) of a mobile station (10; 20), which user interface comprises at least one input device (110, 120; 210, 220, 230) for inputting of character data and/or option choice information into said mobile station (10; 20), **characterized in that** the at least one input device (110, 120; 210, 220, 230) comprises a multidirectional input device (110; 210) arranged to input character data.

2. A user interface (100) according to claim 1, **characterized in that** the multidirectional input device (110; 210) is arranged to also input option choice information.

3. A user interface (100) according to claim 1 or 2, **characterized in that** a selected character is input into the mobile station, when the multidirectional input device (110; 210) has been put into a position corresponding to the selected character, upon one of the following: returning of the multidirectional input device in a neutral position, or pointing the multidirectional input device in a direction corresponding to another character.

4. A user interface (100) according to claim 1 or 2, **characterized in that** a selected character is input into the mobile station, when the multidirectional input device (110; 210) has been put into a position corresponding to the selected character for a predetermined time interval.

5. A user interface (100) according to any of the claims 1 to 4, **characterized in that** the multidirectional input device (110) is arranged to be movable in thirteen directions, each direction being adapted to input character data and/or option choice information into the mobile station.

6. A user interface (200) according to any of the claims 1 to 4, **characterized in that** the multidirectional input device (210) is arranged to be movable in nine directions, each direction being adapted to input character data and/or an option choice information into the mobile station.

7. A user interface (100; 200) according to any of the claims 1 to 4, **characterized in that** the multidirectional input device (110; 210) is a device chosen from the group consisting of the following: a 13 way joystick, a 9 way joystick, and a rocker key.

8. A user interface (100; 200) according to any of the claims 1 to 4, **characterized in that** the multidirectional input device (110; 210) is a device chosen from the group consisting of the following: an analog joystick, a jog ball, a track ball, a disc/wheel dial.

9. A user interface (100; 200) according to claim 8, **characterized in that** the multidirectional input device (110; 210) can be programmed to be movable in a number of directions, where the number of directions can be equal to 13, less than 13 or more than 13, and where each direction is adapted to input character and/or option choice information into the mobile station.

10. A user interface (100; 200) according to any of the claims 1 to 9, **characterized in that** the mobile station (10; 20) is chosen amongst one of the following: a mobile telephone, a Personal Digital Assistant, a remote control device, a cordless telephone, and a game console.

11. A mobile station (10; 20) comprising a user interface (100; 200) with at least one input device (110, 120; 210, 220, 230) for inputting of character data and/or option choice information into the mobile station (10; 20), **characterized in that** the at least one input device (110, 120; 210, 220, 230) comprises a multidirectional input device (110; 210) arranged to input character data.

12. A mobile station (10; 20) according to claim 11, **characterized in that** the mobile station (10; 20) is chosen amongst one of the following: a mobile telephone, a Personal Digital Assistant, a remote control device, a cordless telephone, and a game console.
